(19) **Europäisches Patentamt**
**European Patent Office**
**Office européen des brevets**

(11) **EP 3 091 774 A2**

(12) **EUROPEAN PATENT APPLICATION**
published in accordance with Art. 153(4) EPC

(43) Date of publication:
**09.11.2016 Bulletin 2016/45**

(51) Int Cl.:
***H04W 16/14*** (2009.01)

(21) Application number: **14791919.5**

(86) International application number:
**PCT/CN2014/079690**

(22) Date of filing: **11.06.2014**

(87) International publication number:
**WO 2014/177112 (06.11.2014 Gazette 2014/45)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(72) Inventors:
• **FENG, Bo**
 **Shenzhen**
 **Guangdong 518057 (CN)**
• **XU, Qianqian**
 **Shenzhen**
 **Guangdong 518057 (CN)**

(30) Priority: **31.12.2013 CN 201310751891**

(71) Applicant: **ZTE Corporation**
**Shenzhen, Guangdong 518057 (CN)**

(74) Representative: **Novagraaf Technologies**
**Bâtiment O2**
**2, rue Sarah Bernhardt**
**CS90017**
**92665 Asnières-sur-Seine Cedex (FR)**

(54) **LTE SYSTEM INTERFERENCE COORDINATION METHOD AND DEVICE**

(57) The present disclosure discloses a method and device for coordinating interference in a Long Term Evolution (LTE) system, and relates to the technical field of mobile communication. The method includes the following steps that: a maximum number of RBs to be scheduled in a current TTI of the cell is calculated according to a mean number of RBs scheduled in each TTI of the cell; the number of RBs is allocated, according to the maximum number of RBs, to each piece of UE needing to be scheduled in the current TTI of the cell; and RB positions are start to be allocated to each piece of UE of the cell in a manner that the RB positions allocated to UEs of the cell are different from or not completely the same as RB positions allocated to UEs of a neighbouring cell after the number of RBs is allocated to each piece of UE. According to the present disclosure, the cell may be fixedly prevented from interference of neighbouring cells on most of RB segments, thereby improving the reliability of the service channel transmission and reducing system performance loss.

A maximum number of RBs to be scheduled in a current TTI of a cell is calculated according to a mean number of RBs scheduled in each TTI of the cell — S101

The number of RBs is allocated, according to the maximum number of RBs, to each piece of UE needing to be scheduled in the current TTI of the cell on the basis of the maximum number of the RBs — S102

RB positions are started to be allocated to each piece of UE of the cell in a manner that the RB positions allocated to UEs of the cell are different from or not completely the same as RB positions allocated to UEs of a neighbouring cell after the number of RBs is allocated to each piece of UE — S103

Fig. 1

**Description**

**Technical Field**

The present disclosure relates to the technical field of mobile communication, and in particular to a method and device for coordinating interference in a Long Term Evolution (LTE) networking with a same-frequency.

**Background**

An LTE system is a same-frequency networking, inter-cell same-frequency interference is inevitable in a same-frequency network system, and how to reduce the inter-cell same-frequency interference is always the key to improve the throughput of the cell.
In a practical LTE system, a load of a cell may usually not be too high, and long-time statistics show that a utilization rate of a Resource Block (RB) of the cell may be at a lower level; and however, a service of a user in the cell may fluctuate, which may cause fluctuation of the utilization rate of the RB of the cell specifically in a Transmission Time Interval (TTI), and then the system may make such an assessment that interference of a neighbouring cell is unstable and may not be converged to a stable state, thereby causing influence on improvement of the throughput of the cell.

**Summary**

The present disclosure provides a method and device for coordinating interference in an LTE system, which solve the problem of same-frequency interference existing when an average RB utilization rate of a cell in a period of time is relatively low but an RB utilization rate in each TTI is unstable in a related art.
According to one aspect of the present disclosure, a method for coordinating interference in an LTE system is provided, wherein the method may include: calculating, according to a mean number of Resource Blocks (RBs) scheduled in each Transmission Time Interval (TTI) of a cell, a maximum number of RBs to be scheduled in a current TTI of the cell; allocating, according to the maximum number of RBs, the number of RBs to each piece of User Equipment (UE) needing to be scheduled in the current TTI of the cell; and after allocating the number of RBs to each piece of UE, starting to allocate RB positions to each piece of UE of the cell in a manner that the RB positions allocated to UEs of the cell are different from or not completely the same as RB positions allocated to UEs of a neighbouring cell.
In an example embodiment, calculating, according to the mean number of RBs scheduled in each TTI of the cell, the maximum number of RBs to be scheduled in the current TTI of the cell includes: acquiring the mean number of the RBs scheduled in each TTI of the cell: $MeanRBWindow_{New} = SumRB4PerTTI/T_{Window}$; and calculating the maximum number of the RBs scheduled in the current TTI of the cell: $RB4TTI = \min(MeanRBWindow_{New} + \Delta RB, RB\_BW)$, where TTI refers to a transmission time interval, RB refers to a resource block, $MeanRBWindow_{New}$ refers to the mean number of the RBs scheduled in each TTI of the cell within a period, $SumRB4PerTTI$ refers to a sum number of the RBs scheduled in each TTI of the cell within the period, $T_{Window}$ refers to a time window length within which statistics on the mean number of the RBs scheduled in each TTI is made for the cell, $RB4TTI$ refers to the calculated maximum number of the RBs scheduled in the current TTI of the cell, $RB\_BW$ refers to the number of RBs in a bandwidth of the cell and $\Delta RB$ refers to a margin.
In an example embodiment, calculating the maximum number of the RBs scheduled in the current TTI of the cell: $RB4TTI = \min(MeanRBWindow_{New} + \Delta RB, RB\_BW)$ includes: when a base station is just powering on and initializing, calculating the maximum number of the RBs scheduled in the current TTI of the cell to be $RB4TTI = RB\_BW$; and after the base station is powered on and initialized, calculating the maximum number of the RBs scheduled in the current TTI of the cell to be $RB4TTI = \min(MeanRBWindow_{New,} + \Delta RB, RB\_BW)$, where $RB4TTI$ refers to the calculated maximum number of the RBs scheduled in the current TTI of the cell, $RB\_BW$ refers to the number of the RBs in the bandwidth of the cell and $MeanRBWindow_{New}$ refers to the mean number of the RBs scheduled in each TTI of the cell within the period.
In an example embodiment, allocating, according to the maximum number of RBs, the number of RBs to each piece of UE needing to be scheduled in the current TTI of the cell includes: allocating the number of RBs to each piece of UE needing to be scheduled in the current TTI of the cell, wherein the number of RBs is not smaller than the maximum number of the RBs.
In an example embodiment, after allocating the number of RBs to each piece of UE, starting to allocate RB positions to each piece of UE of the cell in the manner that the RB positions allocated to UEs of the cell are different from or not completely the same as RB positions allocated to UEs of the neighbouring cell includes: dividing neighbouring cells of all cells in a whole network into cells with different cell types; selecting RB positions which are different or not completely the same for cells with a same cell type of all the cells in the whole network; and allocating the RB positions to each piece of UE of the cell according to the selected RB positions, so as to make the RB positions allocated to the UE of the cell being different from or not completely the same as the RB positions allocated to the UE of the neighbouring cell.

In an example embodiment, the selected RB positions refer to starting points from which the RB positions are allocated to each piece of UE of the cell.

In an example embodiment, further including: allocating the RB positions to each piece of UE of the cell from the starting points in a sequence of from low-frequency RBs to high-frequency RBs or from high-frequency RBs to low-frequency RBs, wherein the starting points corresponds to the RB positions allocated to each piece of UE of the cell.

According to another aspect of the present disclosure, a device for coordinating interference in an LTE system is provided, wherein the device may include: a maximum Resource Block (RB) number calculating component, configured to calculate, according to a mean number of Resource Blocks (RBs) scheduled in each Transmission Time Interval (TTI) of a cell, a maximum number of RBs to be scheduled in a current TTI of the cell; an RB number allocating component, configured to allocate, according to the maximum number of RBs, the number of RBs to each piece of User Equipment, UE, needing to be scheduled in the current TTI of the cell; and an RB position allocating component, configured to, after allocating the number of RBs to each piece of UE, start to allocate RB positions to each piece of UE of the cell in a manner that the RB positions allocated to UEs of the cell are different from or not completely the same as RB positions allocated to UEs of a neighbouring cell.

In an example embodiment, the maximum RB number calculating component includes: an RB number mean acquiring element, configured to acquire the mean number of the RBs scheduled in each TTI of the cell: $MeanRBWindoW_{New} = SumRB4PerTTI/T_{Window}$; and a maximum RB number calculating element, configured to calculate the maximum number of the RBs scheduled in the current TTI of the cell: $RB4TTI = min(MeanRBWindow_{New} + \Delta RB, RB\_BW)$, where TTI refers to a transmission time interval, RB refers to a resource block, $MeanRBWindow_{New}$ refers to the mean number of the RBs scheduled in each TTI of the cell within a period, $SumRB4PerTTI$ refers to a sum number of the RBs scheduled in each TTI of the cell within the period, $T_{Window}$ refers to a time window length within which statistics on the mean number of the RBs scheduled in each TTI is made for the cell, $RB4TTI$ refers to the calculated maximum number of the RBs scheduled in the current TTI of the cell, $RB\_BW$ refers to the number of RBs in a bandwidth of the cell and $\Delta RB$ refers to a margin.

In an example embodiment, the maximum RB number calculating element includes: a first calculating sub-element, configured to, when a base station is just powering on and initializing, calculate the maximum number of the RBs scheduled in the current TTI of the cell to be $RB4TTI = RB\_BW$; and a second calculating sub-element, configured to, after the base station is powered on and initialized, calculate the maximum number of the RBs scheduled in the current TTI of the cell to be $RB4TTI = min(MeanRBWindowNew + \Delta RB, RB\_BW)$, where $RB4TTI$ refers to the calculated maximum number of the RBs scheduled in the current TTI of the cell, $RB\_BW$ refers to the number of the RBs in the bandwidth of the cell and $MeanRBWindow_{New}$ refers to the mean number of the RBs scheduled in each TTI of the cell within the period.

According to the present disclosure, the change of the number of the RBs scheduled in each TTI of the cell is relatively small, and the cell may be fixedly prevented from interference of the neighbouring cells on most of RB segments, thereby improving the reliability of the service channel transmission and reducing system performance loss.

## Brief Description of the Drawings

The drawings described here are adopted to provide further understanding of the present disclosure, and form a part of the present disclosure. Schematic embodiments of the present disclosure and description thereof are adopted to explain the present disclosure and not intended to form improper limits to the present disclosure. In the drawings:

Fig. 1 is a flowchart of a method for coordinating interference in an LTE system according to an embodiment of the present disclosure;

Fig. 2 is a diagram of a device for coordinating interference in an LTE system according to an embodiment of the present disclosure;

Fig. 3 is a flowchart of interference coordination for an LTE system according to an embodiment of the present disclosure;

Fig. 4 is a flowchart of calculating the number of RB scheduled in each TTI of a cell during the interference coordination of an LTE system according to an embodiment of the present disclosure;

Fig. 5 is a diagram of division of cells into types A/B/C in a same-frequency network according to an embodiment of the present disclosure; and

Fig. 6 is a diagram of allocation of RB positions for each type of cell according to an embodiment of the present disclosure.

**Detailed Description of the Embodiments**

A preferred embodiment of the present disclosure will be described below with reference to the drawings in detail. It should be understood that the preferred embodiment described below is only adopted to explain the present disclosure and not intended to limit the present disclosure. It is important to note that the embodiment in the present disclosure and characteristics in the embodiment may be combined under the condition of no conflicts.

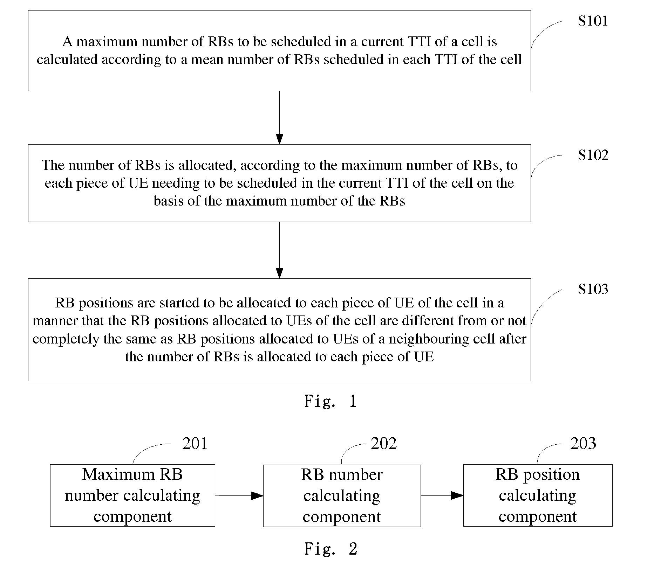

Fig. 1 is a flowchart of a method for coordinating interference in an LTE system according to an embodiment of the present disclosure, and as shown in Fig. 1, the method includes the following steps:

Step 101: a maximum number of RBs to be scheduled in a current TTI of a cell is calculated according to a mean number of RBs scheduled in each TTI of the cell;

Step 102: the number of RBs is allocated, according to the maximum number of RBs, to each piece of UE needing to be scheduled in the current TTI of the cell; and

Step 103: after allocating the number of RBs to each piece of UE, RB positions are start to allocate to each piece of UE of the cell in a manner that the RB positions allocated to UEs of the cell are different from or not completely the same as RB positions allocated to UEs of a neighbouring cell.

Wherein, the step that the maximum number of the RBs to be scheduled in the current TTI of the cell is calculated according to the mean number of the RBs scheduled in each TTI of the cell includes that: the mean of the number of the RBs scheduled in each TTI of the cell is acquired: $MeanRBWindow_{New} = SumRB4PerTTI/T_{Window}$; and the maximum number of the RBs scheduled in the current TTI of the cell is calculated: $RB4TTI = min(MeanRBWindow_{New} + \Delta RB, RB\_BW)$, where TTI refers to a transmission time interval, RB refers to a resource block, $MeanRBWindow_{New}$ refers to the mean number of the RBs scheduled in each TTI of the cell within a period, $SumRB4PerTTI$ refers to a sum number of the RBs scheduled in each TTI of the cell within the period, $T_{Window}$ refers to a time window length within which statistics on the mean number of the RBs scheduled in each TTI is made for the cell, $RB4TTI$ refers to the calculated maximum number of the RBs scheduled in the current TTI of the cell, $RB\_BW$ refers to the number of RBs in a bandwidth of the cell and $\Delta RB$ refers to a margin.

Specifically, the step that the maximum number of the RBs scheduled in the current TTI of the cell is calculated: $RB4TTI = min(MeanRBWindow_{New} + \Delta RB, RB\_BW)$ includes that: when a base station is just powering on and initializing, the maximum number of the RBs scheduled in the current TTI of the cell is calculated to be $RB4TTI = RB\_BW$; and after the base station is powered on and initialized, the maximum number of the RBs scheduled in the current TTI of the cell is calculated to be $RB4TTI = min(MeanRBWindow_{New} + ARB, RB\_BW)$, where $RB4TTI$ refers to the calculated maximum number of the RBs scheduled in the current TTI of the cell, $RB\_BW$ refers to the number of the RBs in the bandwidth of the cell and $MeanRBWindow_{New}$ refers to the mean number of the RBs scheduled in each TTI of the cell within the period.

According to the present disclosure, the step that the number of RBs are allocated, according to the maximum number of RBs, to each piece of UE needing to be scheduled in the current TTI of the cell includes that: the number of RBs is allocated to each piece of UE needing to be scheduled in the current TTI of the cell, wherein the number of RBs is not smaller than the maximum number of the RBs.

Specifically, the step that the RB positions are started to be allocated to each piece of UE of the cell in the manner that the RB positions allocated to the UEs of the cell are different from or not completely the same as the RB positions allocated to the UEs of the neighbouring cell after the number of RBs is allocated to each piece of UE includes that: the neighbouring cells of all cells in a whole network are divided into cells with different cell types; RB positions which are different or not completely the same are selected for cells with a same cell type of all the cells in the whole network; and the RB positions are allocated to each piece of UE of the cell according to the selected RB positions, so as to make the RB positions allocated to the UE of the cell being different from or not completely the same as the RB positions allocated to the UE of the neighbouring cell.

The selected RB positions refer to starting points from which the RB positions are allocated to each piece of UE of the cell.

The method further includes that: the RB positions are allocated to each piece of UE of the cell from the starting points in a sequence of from low-frequency RBs to high-frequency RBs or from high-frequency RBs to low-frequency RBs, wherein the starting points corresponds to the RB positions allocated to each piece of UE of the cell.

Fig. 2 is a diagram of a device for coordinating interference in an LTE system according to an embodiment of the present disclosure, and as shown in Fig. 2, the device includes: a maximum RB number calculating component 201, configured to calculate, according to a mean number of RBs, scheduled in each TTI of a cell, a maximum number of RBs to be scheduled in a current TTI of the cell; an RB number calculating component 202, configured to allocate, according to the maximum number of RBs, the number of RBs to each piece of UE needing to be scheduled in the current TTI of the cell; and an RB position calculating component 203, configured to, after allocating the number of RBs to each piece of UE, start to allocate RB positions to each piece of UE of the cell in a manner that the RB positions allocated to UEs of the cell are different from or not completely the same as RB positions allocated to UEs of a neighbouring cell.

Wherein, the maximum RB number calculating component 201 includes: an RB number mean acquiring element, configured to acquire the mean number of the RBs scheduled in each TTI of the cell: $MeanRBWindow_{New}$= $SumRB4PerTTI/T_{Window}$; and a maximum RB number calculating element, configured to calculate the maximum number of the RBs scheduled in the current TTI of the cell: $RB4TTI = min(MeanRBWindow_{New}+\Delta RB,RB\_BW)$, where TTI refers to a transmission time interval, RB refers to a resource block, $MeanRBWindow_{New}$ refers to the mean number of the RBs scheduled in each TTI of the cell within a period, $SumRB4PerTTI$ refers to a sum number of the RBs scheduled in each TTI of the cell within the period, $T_{window}$ refers to a time window length within which statistics on the mean number of the RBs scheduled in each TTI is made for the cell, $RB4TTI$ refers to the calculated maximum number of the RBs scheduled in the current TTI of the cell, $RB\_BW$ refers to the number of RBs in a bandwidth of the cell and $\Delta RB$ refers to a margin.

Specifically, the maximum RB number calculating element includes: a first calculating sub-element, configured to, when a base station is just powering on and initializing, calculate the maximum number of the RBs scheduled in the current TTI of the cell to be $RB4TTI = RB\_BW$; and a second calculating sub-element, configured to, after the base station is powered on and initialized, calculate the maximum number of the RBs scheduled in the current TTI of the cell to be $RB4TTI = min(MeanRBWindow_{New} + \Delta RB,RB\_BW)$, where $RB4TTI$ refers to the calculated maximum number of the RBs scheduled in the current TTI of the cell, $RB\_BW$ refers to the number of the RBs in the bandwidth of the cell and $MeanRBWindow_{New}$ refers to the mean number of the RBs scheduled in each TTI of the cell within the period.

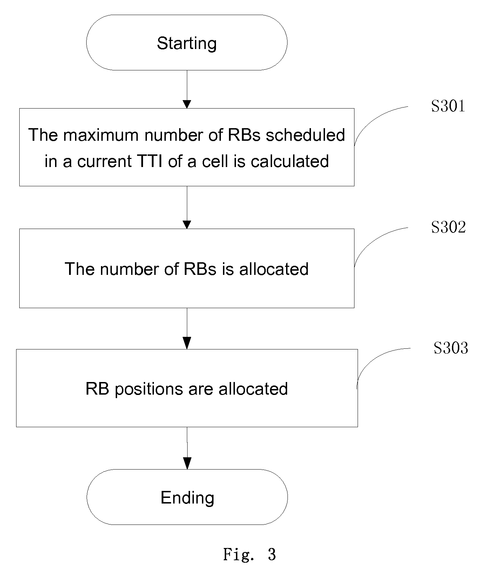

Fig. 3 is a flowchart of interference coordination for an LTE system according to an embodiment of the present disclosure, and as shown in Fig. 3, the flow includes the following steps.

Step 301: a maximum number of RBs scheduled in a current TTI of a cell is calculated.

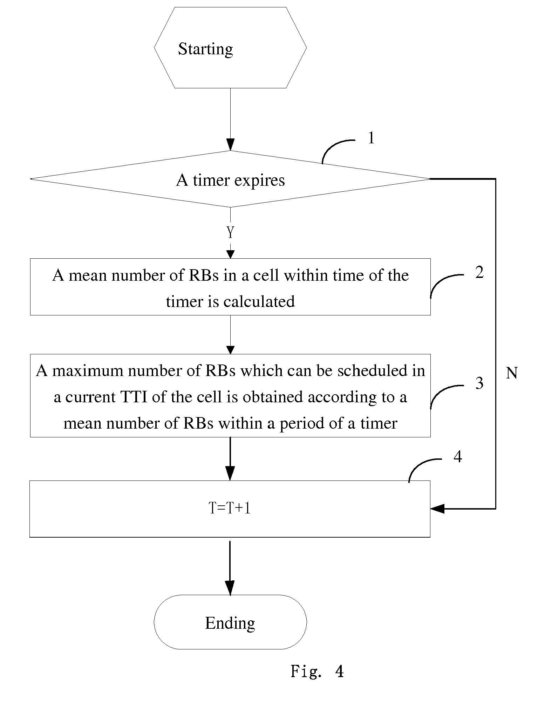

A timer T is designed, the timer T is started after a base station is powered on, and after the timer T is expired, the timer T is automatically reset, and restarts timing, as shown in Fig. 4:

1: whether the timer expires or not is judged, 2 is executed when a judgement result is that the timer expires, otherwise 4 is executed when the judgement result is that the timer does not expire; and
2: $MeanRBWindow_{New} = SumRB4PerTTI/T_{window}$, then 3 is executed. Particularly, for a Time Division Duplex (TDD) mode, $T_{window}$ refers to a time window length within which statistics on a mean number of RBs scheduled in each TTI is made for the cell, and merely includes the number of uplink or downlink subframes rather than all subframes, $SumRB4PerTTI$ is a sum number of the RBs scheduled in each TTI of the cell within time of the timer, and $MeanRBWindow_{New}$ is a mean number of the RBs scheduled in each TTI of the cell within the time of the timer.
3: $RB4TTI = min(MeanRBWindow_{New}+ \Delta RB,RB\_BW)$. Particularly, when the base station is just powering on and the timer T just starts timing and does not expire, $RB4TTI = RB\_BW$.
4:

$$4: T=T+1.$$

Where $SumRB4PerTTI$ is a sum number of RBs scheduled in each TTI of a certain cell within a period, and $SumRB4PerTTI$ =0 during initialization; $RB4TTI$ represents the total number of RBs which can be scheduled in the current TTI of the cell; $RB\_BW$ represents the number of RBs in a bandwidth of the cell; $RB4TTI$ =$RB\_BW$ during initialization; and $\Delta RB$ is a designed margin, and as a default, $\Delta RB$=0.

Step 302: the number of RBs is allocated to each piece of UE needing to be scheduled in the current TTI of the cell according to a certain rule.

When the number of RBs is allocated to each piece of UE in the cell, the number of the RBs is not allocated to other UEs after the allocated number of the RBs reaches $RB4TTI$, then RB positions are directly allocated, and $SumRB4PerTTI = SumRB4PerTTI + RBNum4TTI$, where $RBNum4TTI$ refers to the number of RBs practically allocated in the current TTI of the cell.

Step 303: RB positions are allocated to the UE needing to be scheduled in the current TTI of the cell.

All cells in the whole network are divided into cells with N types according to a certain principle, so that types of neighbouring cells are ensured to be different as much as possible, fixed RB positions are selected for each type of cells as starting points from which RB positions in the cells are allocated, and different types of cells may correspond to different RB starting positions.

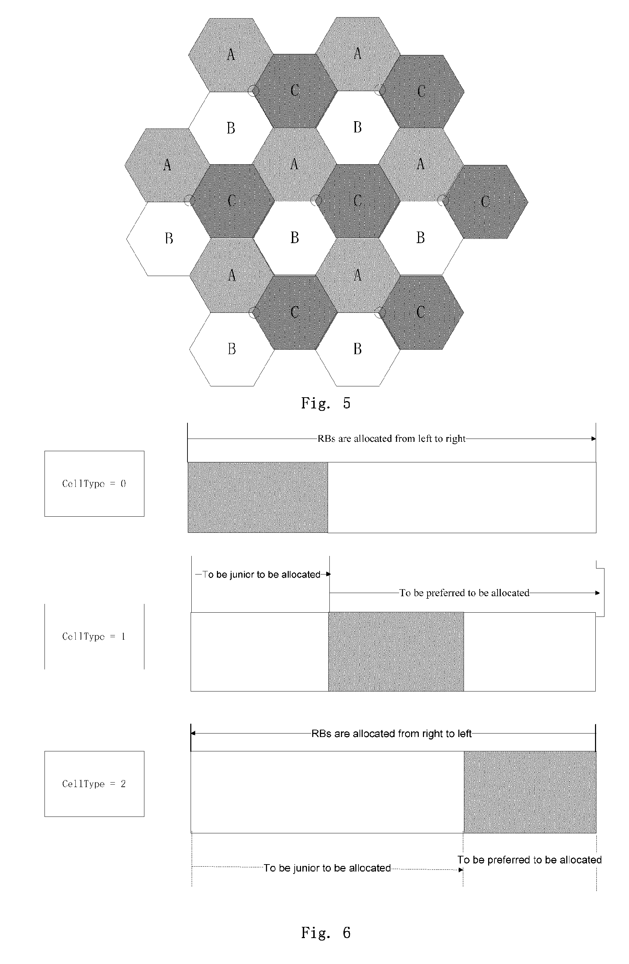

For example, with reference to Fig. 5 and Fig. 6, all the cells in the whole network are divided into cells with types A, B and C, the types of the neighbouring cells are different, one fixed RB position is selected for each type of cells as the starting point from which the RB positions in the cells are allocated, and different types of cells may corresponds to different RB starting positions.

CellType=PCI mod 3, PCI: Physical Cell ID, CellType is obtained by the adoption of PCI mode 3, which is merely an example here, and a cell type parameter may be obtained by another method in a practical system.

The cell allocates RB positions to scheduling users, including the following three:

CellType=0, and the cell allocates idle RB positions to the users of the cell by taking a RB with a lowest-frequency as a starting RB in a sequence of from low-frequency RBs to high-frequency RBs;

CellType=1, the cell allocates the idle RB positions to the users of the cell by taking an RB at a 1/3 position of a bandwidth as the starting RB in a sequence of from low-frequency RBs to high-frequency RBs, and when the number of RBs to the tail of a frequency band is insufficient for certain UE, the cell continues allocating RB positions to the UE from the lowest-frequency RB to the tail of the frequency band; and

CellType=2, the cell allocates the idle RB positions to the users of the cell by taking a highest-frequency RB as the starting RB in a sequence of from high-frequency RBs to low-frequency RBs, or allocates the idle RB positions to the users of the cell by taking an RB at a 2/3 position of the bandwidth as the starting RB in a sequence of from low-frequency RBs to high-frequency RBs, and when the number of the RBs to the tail of the frequency band is insufficient for certain UE, the cell continues allocating RB positions to the UE from the lowest-frequency RB to the tail of the frequency band.

From the above, an RB using condition of the cell in a past period of time may be known by periodically making statistics on the mean RB utilization rate of the cell in the present disclosure, and the total number of the scheduled RBs of the cell is limited in each TTI of the next period, so that the change of the number of the RBs scheduled in each TTI of the cell is relatively small. Moreover, all the cells in the whole network are divided into cells with N types according to a certain principle, so that the types of the neighbouring cells are ensured to be different as much as possible, the fixed RB positions are selected for each type of cells as the starting points from which the RB positions in the cells are allocated, and different types of cells may corresponds to different RB starting positions. The cell allocates the RB positions to each piece of UE of the cell till the tail of the frequency band from the corresponding starting RB position in a sequence of from small RB indexes to large RB indexes. When there is still UE not allocated with any RB position in the cell till the highest-frequency RB, the cell continues allocating RB positions to the UE of the cell from the lowest frequency of the cell until the whole frequency band is allocated or the RB positions are allocated to all the users according to a requirement.

When an overall load of the cell is relatively low, by the solution, the number of the RBs scheduled in each TTI of the cell may be relatively uniform, the condition of fluctuation may be avoided, and neighbouring cell interference estimated by the cell may be in a relatively stable state; then all the cells in the system are classified, each cell fixedly allocates services on a part of RB segments, and different types of cells are allocated to different frequency bands of the whole bandwidth, so that the cells may be fixedly prevented from interference of the neighbouring cells on most of RB segments, and the aim of inter-cell interference coordination may be fulfilled; when the overall load of the cell is relatively high, the method may not bring any adverse consequences to system performance; and on the other hand, by the method, the maximum number of the scheduled RBs of the cell may be limited within a period of time, thereby ensuring that downlink transmitted power of the base station may not exceed a certain value and that transmitted power of a radio frequency end is within a controllable range and ensuring power amplification efficiency.

The above is only the detailed description of the present disclosure and not intended to limit the present disclosure, and those skilled in the art may make various modifications according to the principle of the present disclosure. Therefore, all the modifications made according to the principle of the present disclosure shall fall within the scope of protection of the present disclosure.

## Claims

1. A method for coordinating interference in a Long Term Evolution, LTE, system, comprising:

calculating, according to a mean number of Resource Blocks, RBs, scheduled in each Transmission Time Interval, TTI, of a cell, a maximum number of RBs to be scheduled in a current TTI of the cell;

allocating, according to the maximum number of RBs, the number of RBs to each piece of User Equipment, UE, needing to be scheduled in the current TTI of the cell; and

after allocating the number of RBs to each piece of UE, starting to allocate RB positions to each piece of UE of the cell in a manner that the RB positions allocated to UEs of the cell are different from or not completely the same as RB positions allocated to UEs of a neighbouring cell.

**2.** The method as claimed in claim 1, wherein calculating, according to the mean number of RBs scheduled in each TTI of the cell, the maximum number of RBs to be scheduled in the current TTI of the cell comprises:

acquiring the mean number of the RBs scheduled in each TTI of the cell:

$$MeanRBWindow_{New} = SumRB4PerTTI \Big/ T_{Window} \; ;$$

and
calculating the maximum number of the RBs scheduled in the current TTI of the cell : $RB4TTI = \min(MeanRBWindow_{New} + \Delta RB, RB\_BW)$,
where TTI refers to a transmission time interval, RB refers to a resource block, $MeanRBWindow_{New}$ refers to the mean number of the RBs scheduled in each TTI of the cell within a period, $SumRB4PerTTI$ refers to a sum number of the RBs scheduled in each TTI of the cell within the period, $T_{Window}$ refers to a time window length within which statistics on the mean number of the RBs scheduled in each TTI is made for the cell, $RB4TTI$ refers to the calculated maximum number of the RBs scheduled in the current TTI of the cell, $RB\_BW$ refers to the number of RBs in a bandwidth of the cell and $\Delta RB$ refers to a margin.

**3.** The method as claimed in claim 2, wherein calculating the maximum number of the RBs scheduled in the current TTI of the cell: $RB4TTI = \min(MeanRBWindow_{New} + \Delta RB, RB\_BW)$ comprises:

when a base station is just powering on and initializing, calculating the maximum number of the RBs scheduled in the current TTI of the cell to be $RB4TTI = RB\_BW$; and
after the base station is powered on and initialized, calculating the maximum number of the RBs scheduled in the current TTI of the cell to be $RB4TTI = \min(MeanRBWindow_{New} + \Delta RB, RB\_BW)$,
where $RB4TTI$ refers to the calculated maximum number of the RBs scheduled in the current TTI of the cell, $RB\_BW$ refers to the number of the RBs in the bandwidth of the cell and $MeanRBWindow_{New}$ refers to the mean number of the RBs scheduled in each TTI of the cell within the period.

**4.** The method as claimed in claim 2 or 3, wherein allocating, according to the maximum number of RBs, the number of RBs to each piece of UE needing to be scheduled in the current TTI of the cell comprises:

allocating the number of RBs to each piece of UE needing to be scheduled in the current TTI of the cell, wherein the number of RBs is not smaller than the maximum number of the RBs.

**5.** The method as claimed in claim 4, wherein after allocating the number of RBs to each piece of UE, starting to allocate RB positions to each piece of UE of the cell in the manner that the RB positions allocated to UEs of the cell are different from or not completely the same as RB positions allocated to UEs of the neighbouring cell comprises:

dividing neighbouring cells of all cells in a whole network into cells with different cell types;
selecting RB positions which are different or not completely the same for cells with a same cell type of all the cells in the whole network; and
allocating the RB positions to each piece of UE of the cell according to the selected RB positions, so as to make the RB positions allocated to the UE of the cell being different from or not completely the same as the RB positions allocated to the UE of the neighbouring cell.

**6.** The method as claimed in claim 5, wherein the selected RB positions refer to starting points from which the RB positions are allocated to each piece of UE of the cell.

**7.** The method as claimed in claim 6, further comprising:

allocating the RB positions to each piece of UE of the cell from the starting points in a sequence of from low-frequency RBs to high-frequency RBs or from high-frequency RBs to low-frequency RBs, wherein the starting points corresponds to the RB positions allocated to each piece of UE of the cell.

**8.** A device for coordinating interference in a Long Term Evolution, LTE, system, comprising:

a maximum Resource Block, RB, number calculating component, configured to calculate, according to a mean number of Resource Blocks, RBs, scheduled in each Transmission Time Interval, TTI, of a cell, a maximum number of RBs to be scheduled in a current TTI of the cell;

an RB number allocating component, configured to allocate, according to the maximum number of RBs, the number of RBs to each piece of User Equipment, UE, needing to be scheduled in the current TTI of the cell; and

an RB position allocating component, configured to, after allocating the number of RBs to each piece of UE, start to allocate RB positions to each piece of UE of the cell in a manner that the RB positions allocated to UEs of the cell are different from or not completely the same as RB positions allocated to UEs of a neighbouring cell.

9. The device as claimed in claim 8, wherein the maximum RB number calculating component comprises:

an RB number mean acquiring element, configured to acquire the mean number of the RBs scheduled in each TTI of the cell:

$$MeanRBWindow_{New} = \frac{SumRB4PerTTI}{T_{Window}};$$

and

a maximum RB number calculating element, configured to calculate the maximum number of the RBs scheduled in the current TTI of the cell: $RB4TTI = min(MeanRBWindow_{New}+\Delta RB,RB\_BW)$,

where TTI refers to a transmission time interval, RB refers to a resource block, $MeanRBWindoW_{New}$ refers to the mean number of the RBs scheduled in each TTI of the cell within a period, $SumRB4PerTTI$ refers to a sum number of the RBs scheduled in each TTI of the cell within the period, $T_{Window}$ refers to a time window length within which statistics on the mean number of the RBs scheduled in each TTI is made for the cell, $RB4TTI$ refers to the calculated maximum number of the RBs scheduled in the current TTI of the cell, $RB\_BW$ refers to the number of RBs in a bandwidth of the cell and $\Delta RB$ refers to a margin.

10. The device as claimed in claim 9, wherein the maximum RB number calculating element comprises:

a first calculating sub-element, configured to, when a base station is just powering on and initializing, calculate the maximum number of the RBs scheduled in the current TTI of the cell to be $RB4TTI = RB\_BW$; and

a second calculating sub-element, configured to, after the base station is powered on and initialized, calculate the maximum number of the RBs scheduled in the current TTI of the cell to be $RB4TTI = min(MeanRBWindow_{New}+\Delta RB,RB\_BW)$,

where $RB4TTI$ refers to the calculated maximum number of the RBs scheduled in the current TTI of the cell, $RB\_BW$ refers to the number of the RBs in the bandwidth of the cell and $MeanRBWindow_{New}$ refers to the mean number of the RBs scheduled in each TTI of the cell within the period.

A maximum number of RBs to be scheduled in a current TTI of a cell is calculated according to a mean number of RBs scheduled in each TTI of the cell

S101

The number of RBs is allocated, according to the maximum number of RBs, to each piece of UE needing to be scheduled in the current TTI of the cell on the basis of the maximum number of the RBs

S102

RB positions are started to be allocated to each piece of UE of the cell in a manner that the RB positions allocated to UEs of the cell are different from or not completely the same as RB positions allocated to UEs of a neighbouring cell after the number of RBs is allocated to each piece of UE

S103

Fig. 1

| 201 | 202 | 203 |
|---|---|---|
| Maximum RB number calculating component | RB number calculating component | RB position calculating component |

Fig. 2

Fig. 3

Starting

A timer expires — 1

Y

A mean number of RBs in a cell within time of the timer is calculated — 2

A maximum number of RBs which can be scheduled in a current TTI of the cell is obtained according to a mean number of RBs within a period of a timer — 3

N

T=T+1 — 4

Ending

Fig. 4

Fig. 5

Fig. 6